# EUROPEAN PATENT APPLICATION

(11) **EP 2 200 267 A2**
(43) Date of publication of application: **23.06.2010**
(21) Application number: 09179496.6
(22) Date of filing: 16.12.2009
(51) Int. Cl.: H04N 1/387

(54) **Image processing apparatus and image processing method**

(30) Priority: 17.12.2008 JP 2008321642
(71) Applicant: CANON KABUSHIKI KAISHA, Ohta-ku Tokyo 146-8501 (JP)
(72) Inventor: Taketomo, Naruse, Ohta-ku Tokyo (JP)
(74) Representative: Hitching, Peter Matthew

(57) **Abstract**

When combining at least two images, a displacement between the images to be combined is corrected before combining the images. Therefore, the images to be combined are displayed on a display screen to correct the displacement. Further, the images may be enlarged for display so as to correct the displacement with increased precision. However, if an area for enlarging does not include image information, it is difficult for a user to recognize the displacement between images and correct the displacement. Accordingly, image information included in the images is detected and an area including at least the detected image information is displayed.

## Description

### BACKGROUND OF THE INVENTION

### Field of the Invention

The present invention relates to an image processing apparatus provided to combine a plurality of images.

### Description of the Related Art

Apparatuses configured to read data shown on a single document sheet that is larger than a document table, to combine at least two read image data items, and to print the combined image data items have been proposed. However, a displacement occurs between the read image data items during the printing. That is to say, since a user places the document on the document table at least two times to make the apparatus read the document data, the manner of placing the document on the document table is slightly changed for each time the apparatus reads the document data. Consequently, if the image data items are combined as they are, a displacement between the image data items divided for reading is shown on the combined image data items.

Accordingly, technologies for correcting the displacement between the image data items divided for reading have been proposed. For example, the technology for correcting a displacement by a user has been disclosed in Japanese Patent Laid-Open No. 02-159678. According to the above-described technology, when combining at least two image data items stored in an image memory, the image data items are displayed on a display screen and the user performs an operation while viewing the display screen to move a combination part relative to another and combine the image data items.

If the size of the display screen is not sufficient, it may be difficult to correct the displacement occurring in the combination. For example, if an entire image is displayed, the reduction scale is decreased and the amount of the displacement occurring in the combination is visually recognized with difficulty. Therefore, since the displacement between the images occurs due to an error which occurs when the document is placed on the document table, the entire image need not be displayed. Namely, in place of the entire image, an image of the combination parts shown in the proximity of the combination interface should be enlarged and displayed. Here, Japanese Patent Laid-Open No. 10-336424 discloses the technology for displaying at least two images for combination on a display unit so that a user corrects a displacement occurring at a combination interface by enlarging and rotating the images, for example, while visually checking the images. The above-described technology may allow for changing details of data displayed on a display unit through an operation performed by the user. In that case, however, the image of a display position has to be moved and enlarged repeatedly to display a desired position in the images. The user performs complicated operations to achieve the above-described processing.

Therefore, the combination parts may be enlarged for display when the images are displayed first time. However, since the size of a character and/or a figure is varied among documents, the above-described method may not be appropriate to correct the displacement when a predetermined display position and/or a predetermined display magnification is set. When displaying only the background of an image, a user recognizes a displacement occurring in the image with difficulty. Consequently, the user corrects the displacement with difficulty.

### SUMMARY OF THE INVENTION

The present invention provides an image processing apparatus for combining images that are parts of the same original image. The image processing apparatus can display data under a display magnification and in a display position that are determined to allow a user to easily correct a displacement when the image parts at a combination interface are displayed on a display screen to correct a displacement between the images for combining.

The present invention in its first aspect provides an image processing apparatus as specified in claims 1 to 11.

The present invention in its second aspect provides an image processing method as specified in claim 12.

The present invention in its third aspect provides a program as specified in claim 13.

The present invention in its fourth aspect provides a program as specified in claim 14.

Further features of the present invention will become apparent from the following description of exemplary embodiments with reference to the attached drawings.

### BRIEF DESCRIPTION OF THE DRAWINGS

Fig. 1 shows an external view of an image processing apparatus according to an embodiment of the present invention.

Fig. 2 shows an exemplary configuration of an image processing apparatus according to an embodiment of the present invention.

Fig. 3A is a block diagram showing an exemplary internal configuration of a ROM of the image processing apparatus.

Fig. 3B is a block diagram showing another exemplary internal configuration of the ROM of the image processing apparatus.

Fig. 4 is a block diagram showing an exemplary internal configuration of a DRAM of the image processing apparatus.

Fig. 5 shows an external configuration of an operation unit of the image processing apparatus.

Fig. 6 shows the details of a read unit of the image processing apparatus.

Fig. 7 illustrates operations performed through the read unit to read data shown on an upper part of a document when the document is divided into the upper part and a lower part so that the document data is read in two readings.

Fig. 8 illustrates operations performed through the read unit to read data shown on the lower part of the document when the document is divided into the upper part and the lower part so that the document data is read in two readings.

Fig. 9 shows an image of which data items are stored in an upper image area and a lower image area.

Fig. 10 shows the entire flow of processing performed for the embodiment.

Fig. 11 is a flowchart showing the details of step S102 shown in Fig. 10.

Fig. 12 shows a display unit displaying an image achieved when data items of the upper and lower parts of the document are read and the entire preview image is displayed.

Fig. 13 is a flowchart showing the details of step S105 shown in Fig. 11.

Fig. 14 shows the display unit displayed at step S403 shown in Fig. 13.

Fig. 15 is a flowchart showing the details of step S402 performed when an image analysis program detects the presence or absence of image information.

Fig. 16 is a flowchart showing the details of step S402 performed when an image analysis program detects character data.

Fig. 17 is a flowchart showing the details of step S402 performed when the image analysis program detects data of a predetermined image pattern.

Fig. 18 is a flowchart showing the details of step S402 performed when the image analysis program detects character data and especially when image information is shown at the combination interface.

Fig. 19A is an exemplary image displayed when the processing corresponding to step S504 shown in Fig. 15 is performed.

Fig. 19B is another exemplary image displayed when the processing corresponding to step S504 shown in Fig. 15 is performed.

Fig. 19C is another exemplary image displayed when the processing corresponding to step S504 shown in Fig. 15 is performed.

Fig. 20A is an exemplary image displayed when the processing corresponding to step S604 shown in Fig. 16 is performed.

Fig. 20B is another exemplary image displayed when the processing corresponding to step S604 shown in Fig. 16 is performed.

Fig. 20C is another exemplary image displayed when the processing corresponding to step S604 shown in Fig. 16 is performed.

Fig. 21A is an exemplary image displayed when the processing corresponding to step S704 shown in Fig. 17 is performed.

Fig. 21B is another exemplary image displayed when the processing corresponding to step S704 shown in Fig. 17 is performed.

Fig. 21C is another exemplary image displayed when the processing corresponding to step S704 shown in Fig. 17 is performed.

Fig. 22A is an exemplary image displayed when the processing corresponding to step S805 shown in Fig. 18 is performed.

Fig. 22B is another exemplary image displayed when the processing corresponding to step S805 shown in Fig. 18 is performed.

Fig. 22C is another exemplary image displayed when the processing corresponding to step S805 shown in Fig. 18 is performed.

Fig. 23A is an exemplary image displayed when the processing corresponding to step S807 shown in Fig. 18 is performed.

Fig. 23B is another exemplary image displayed when the processing corresponding to step S807 shown in Fig. 18 is performed.

Fig. 23C is another exemplary image displayed when the processing corresponding to step S807 shown in Fig. 18 is performed.

Fig. 24 is a flowchart showing the details of step S404 shown in Fig. 13.

Fig. 25 shows an exemplary image adjustment menu displayed at step S904.

Fig. 26 is a flowchart showing the details of step S106 shown in Fig. 10.

Fig. 27 shows an image achieved by correcting a displacement between images.

### DESCRIPTION OF THE EMBODIMENTS

Hereinafter, preferred embodiments of the present invention will be described in detail with reference to the attached drawings. The relative positions of components, display screens, and so forth that are written in the above-described embodiments do not limit the scope of the present invention thereto unless a limiting statement is particularly made.

Hereinafter, an image processing apparatus according to an embodiment of the present invention will be described. According to the image processing apparatus, data shown on a document placed on a document table is read and data items of a plurality of images are combined and printed through a print unit provided as an ink-jet printer. According to the above-described embodiment, data of a document of a size larger than that which can be read through the document table is divided into at least two data items and read in at least two readings. The images corresponding to the divided data items, the images being obtained by reading the document data in the at least two readings, are displayed and the amount of a displacement between the images is obtained based on an operation performed by a user.

Then, in the above-described embodiment, the document data is printed on a print form provided as a print sheet while a displacement between the combined parts of the document data is corrected based on the displacement amount. More specifically, data of an A3-sized document is divided into the data items corresponding to two parts including upper and lower images on an A4-sized document table for reading. Then, the amount of a displacement between the upper and lower images is obtained, and data of an image obtained by correcting the above-described displacement and combining the upper and lower images is printed, for example. The size of the document is not limited so that a B4-sized document and/or a document of indefinite shape may be used.

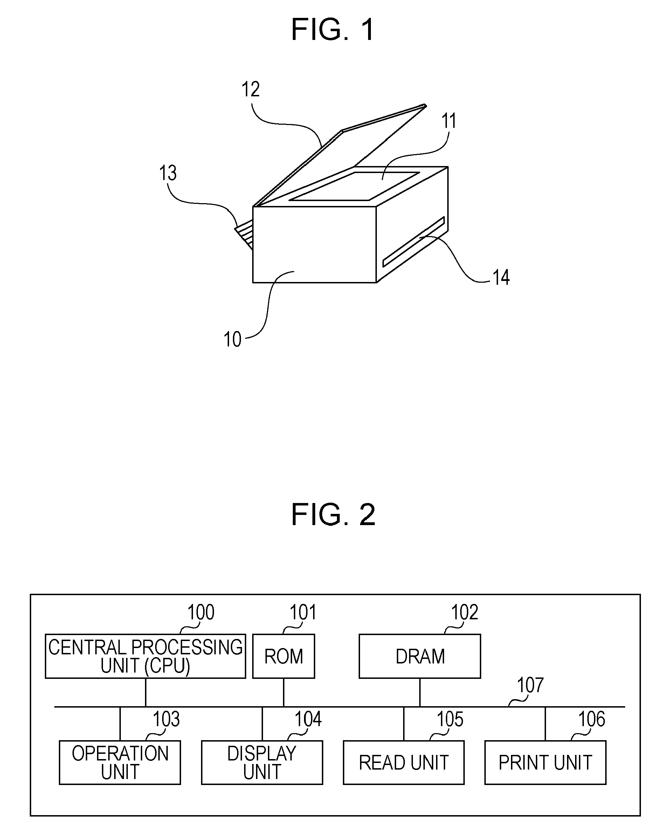

Fig. 1 shows an external view of the image processing apparatus of the above-described embodiment. Fig. 1 shows a main body 10 of the image processing apparatus, a document table 11 on which a document is set so as to read data shown on the document, a document cover 12 provided to block external light when the document data is read, a print-form insertion port 13 provided as a port into which a print form is inserted, and a print-form ejection port 14 provided as a port from which the printed print form is ejected.

Fig. 2 shows a configuration of the image processing apparatus according to an embodiment of the present invention. Fig. 2 shows a central processing unit (CPU) 100 provided to control the entire apparatus, a read only memory (ROM) 101 provided to store a program and data, and a storage unit provided as a dynamic random access memory (DRAM) 102 including a temporary storage area such as an image memory. The CPU 100 uses the DRAM 102 as a work memory and performs control based on the program stored in the ROM 101.

Fig. 2 also shows an operation unit 103 including keys operated by the user and a display unit 104 displaying screen information including data of graphics, a message, and so forth in color. Image data is displayed on the display unit 104 under the display control of the CPU 100. Further, the CPU 100 performs movement control based on an operation performed for the operation unit 103, the operation being performed by the user, so that the image data displayed on the display 104 can be moved on the display screen. Fig. 2 also shows a read unit 105 provided to read the document data. When the document data is read through the read unit 105, image data is stored in the DRAM 102 under the storage control of the CPU 100. A print unit 106 has an ink-jet mechanism so that the image data is printed on a print form when the image data is transmitted to the print unit 106. A system bus 107 is provided to allow each of the units of the image processing apparatus to perform data communications.

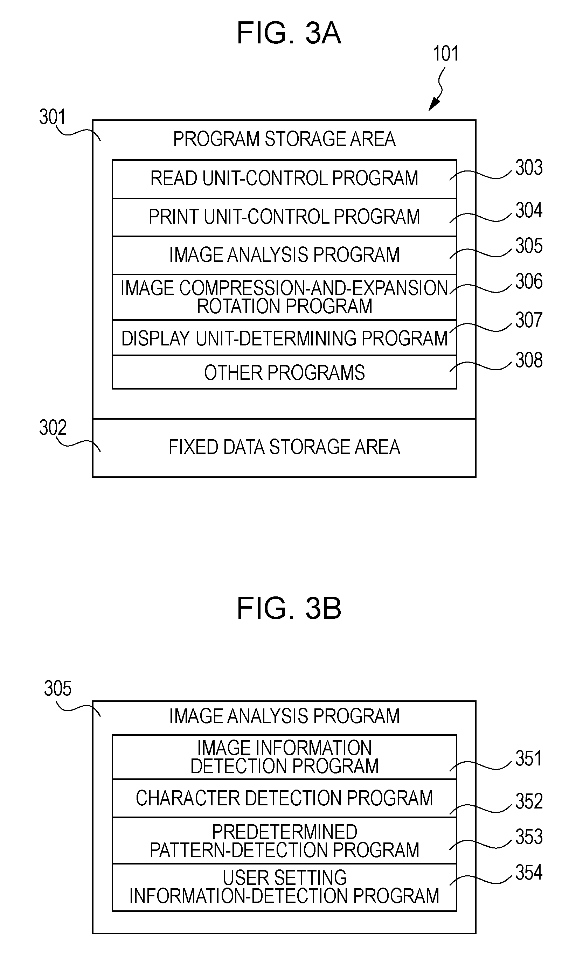

Each of Figs. 3A and 3B is a block diagram showing an internal configuration of the ROM 101. Fig. 3A shows the entire configuration of the ROM 101 including a program storage area 301 and a fixed data storage area 302. The program storage area 301 is divided into the following blocks including a read-unit control program 303 provided to control the read unit 105, a print-unit control program 304 provided to control the print unit 106, an image analysis program 305 of which details will be described later with reference to Fig. 3B, an image compression-and-expansion rotation program 306 provided to perform image compression-and-expansion processing, a display unit-determining program 307 provided to determine the position and/or the magnification of image data displayed on the display unit 104, and various other programs 308. The fixed data storage area 302 stores fixed data such as data of a form (page) size.

Fig. 3B shows a configuration of the image analysis program 305. The display unit-determining program 307 makes a determination based on the result of an analysis performed by the image analysis program 305 divided into the following blocks including an image information detection program 351 provided to analyze document image data obtained by reading data of a document and detect image information useful to correct a displacement occurring in the document image data.

In the above-described embodiment, the term "image information" denotes image data determined not to be data of an image of the background. The image information may be a pixel having a pixel value different from that of white and/or a color similar thereto. However, since the color of the background image itself may not be white, data of an edge shown in the image may be detected and a pixel which is determined to be different from the background image may be determined to be the image information.

Then, the above-described image information detection program 351 includes the following three programs. One of the programs is configured to detect image information shown in a position and/or a range when the position and/or the range is specified in document image data obtained by reading data of a document. Another of the programs is provided to detect image information shown in the proximity of a position and/or a range when the position and/or the range is specified in the document image data. The other of the programs is provided to calculate the size of an area including image information when the image information is detected.

A character detection program 352 analyzes the document image data obtained by reading the data of the document and determines whether or not image information included in the document image data is character data so that the character data can be detected. More specifically, the above-described character detection program 352 includes the following four programs. One of the programs is provided to convert character data into character code if the program identifies that the document image data includes the character data. Another of the programs is provided to detect character data included in a position and/or a range when the position and/or the range is specified in the document image data. Another of the programs is provided to detect character data shown in the proximity of a position and/or a range when the position and/or the range is specified in the document image data. The other of the programs is provided to calculate the size of a character when data of the character is detected.

A predetermined pattern-detection program 353 analyzes the document image data and detects whether or not predetermined pattern data is included in the document image data. The above-described predetermined pattern data may include data of a pattern of a predetermined shape including a circle, a square, and so forth, a pattern of closed space enclosed with a line segment, etc., for implementation based on purposes. The predetermined pattern-detection program 353 includes the following programs. One of the programs is provided to detect the predetermined pattern data included in a position and/or a range when the position and/or the range is specified in the document image data. Another of the programs is provided to detect the predetermined pattern data shown in the proximity of a position and/or a range when the position and/or the range is specified in the document image data. The other of the programs is provided to calculate the size of the predetermined pattern when data of the predetermined pattern is detected.

A user setting information-detection program 354 analyzes read document data and detects whether or not user setting information is included in the read document data. The user setting information is information which had been set by the user in the apparatus as a sign used to correct a displacement occurring at a combination interface of image data. For example, when the user wishes to correct the displacement occurring at the combination interface of the image data based on the positions of numbers, data of numbers (1), (2), (3) and so forth is registered. The above-described user setting information-detection program 354 includes the following programs. One of the programs is provided to detect user setting information shown in a position and/or a range based on the registered user setting information when the position and/or the range is specified in the document data. Another of the programs is provided to detect user setting information shown in the proximity of a position and/or a range when the position and/or the range is specified in the document data. The other of the programs is provided to calculate the size of user setting information when the user setting information is detected.

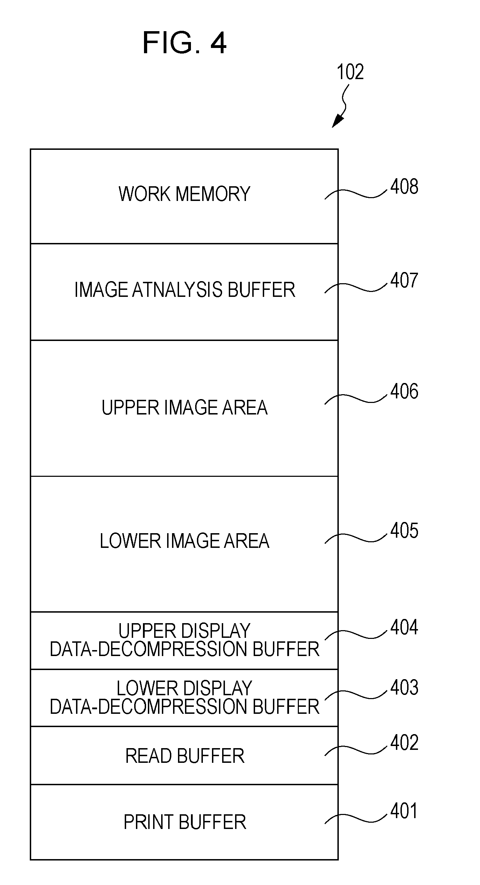

Fig. 4 is a block diagram showing the internal configuration of the DRAM 102 of the image processing apparatus. An upper image area 406 is an area provided to store upper image data obtained by reading data shown on the upper part of a document and compressing the data under the Joint Photographic Experts Group (JPEG) system. Image data items read in predetermined units through the read unit 105 are temporarily stored in a read buffer 402. Then, the image compression-and-expansion rotation program 306 compresses the image data items under the JPEG system and stores the image data items in the upper image area 406 in sequence. A lower image area 405 is an area provided to store lower image data obtained by reading data shown on the lower part of the document and compressing the data under the JPEG system. The method of storing the lower image data is the same as that performed for the upper image area 406.

An upper display data-decompression buffer 404 is provided to store data obtained by unarchiving part of the image data stored in the upper image area 406 so as to display image data on the display unit 104. A lower display data-decompression buffer 403 is provided to store data obtained by unarchiving part of the image data stored in the lower image area 405 so as to display image data on the display unit 104. A print buffer 401 is provided to temporarily store data converted for printing at the printing time. An image analysis buffer 407 is temporarily used by the image analysis program 305 to analyze image data. A work memory 408 is used by other programs.

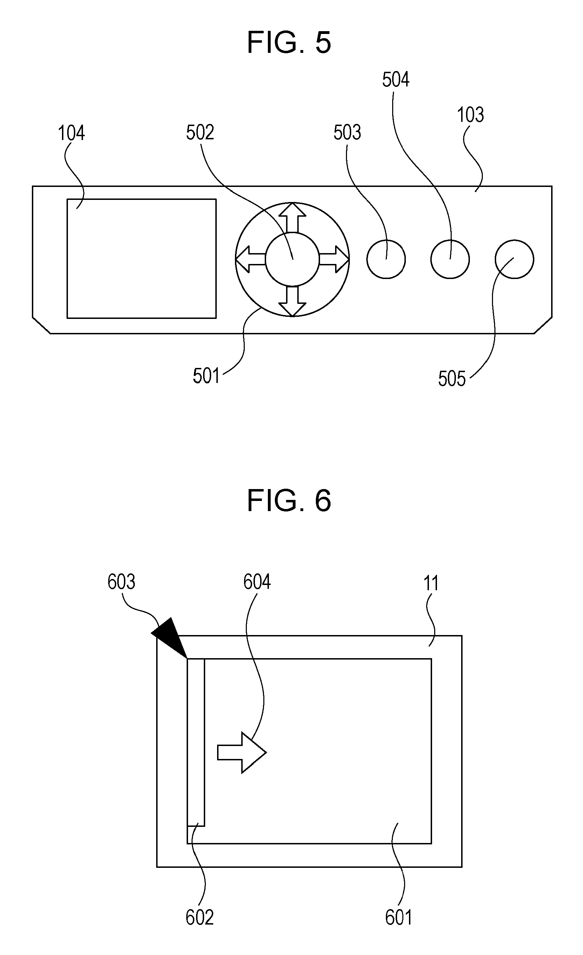

Fig. 5 shows an external configuration of the operation unit 103 of the image processing apparatus. The display unit 104 is a dot-matrix liquid crystal display (LCD). A cross key 501 having a function of inputting data in vertical and horizontal directions is used to move a cursor shown on the display unit 104, for example. A set key 502 is used to input data of settings. A function key 503 is used to set a function, for example. A start key 504 is provided to execute a function including starting printing, for example. If the user presses a displacement correction key 505 when the user determines that there is a displacement to be corrected after data of a plurality of images is read, the displacement is corrected.

Fig. 6 shows the details of the read unit 105 of the image processing apparatus. The read unit 105 includes the document table 11, a glass table 601 provided to set a document thereon, a read sensor 602 provided to read data shown on the document, and a document position marker 603 provided to indicate a position where the document should be set to the user. The read sensor 602 shown in Fig. 6 reads the document data while moving in a direction indicated by an arrow 604 shown in Fig. 6.

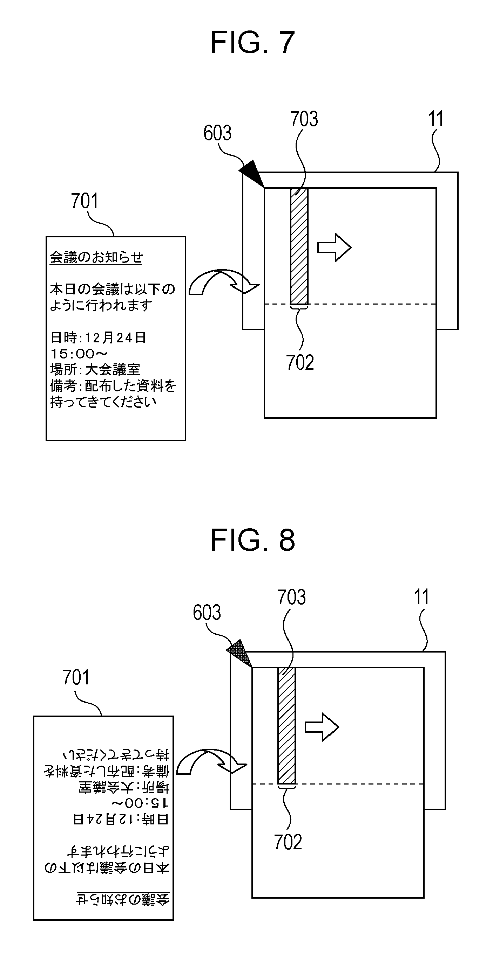

Fig. 7 illustrates operations performed through the read unit 105 so as to read data shown on an upper part of a document when the document is divided into the upper part and a lower part so that the document data is read in two readings. In the above-described embodiment, the size of the document is A3 and that of the document table 11 is A4. The size of a document 701 for reading is A3. The A3-sized document 701 is set so that the upper face for reading of the A3-sized document 701 is opposed to the glass table 601. At that time, the upper left corner of the A3-sized document 701 is confronted with the document position marker 603.

When the data reading is started, data of the image of a read line unit 703 is stored in the read buffer 402 as read data. Here, the read line unit 703 indicates image data stored in the read buffer 402 at a time, and a read band 702 indicates the width of the read line unit 703. Accordingly, data items of the read line unit 703 are stored in the DRAM 102 in sequence as the read sensor 602 is moved. According to Fig. 7, data shown on an upper part of the A3-sized document 703 is read through the read sensor 602 so that data items of the read line unit 703 are accumulated on the upper image area 406 in sequence.

Fig. 8 illustrates operations performed through the read unit 105 so as to read data shown on the lower part of the document when the document is divided into the upper and lower parts so that the document data is read in two readings, as is the case with Fig. 7. The read operations are the same as those performed to read the data shown on the upper part, and data items of the read line unit 703 are accumulated on the lower image area 405 in sequence.

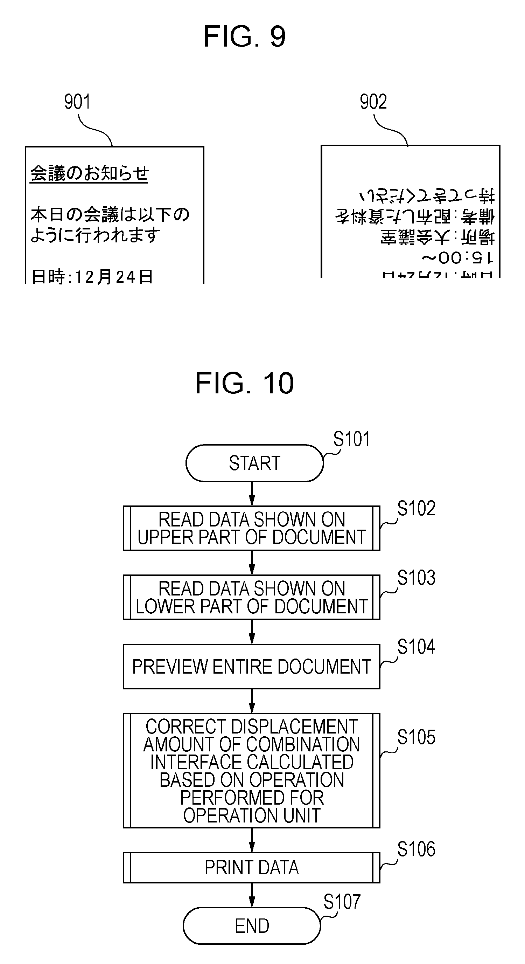

Fig. 9 shows an image of which data items are read through the read operations illustrated in Figs. 7 and 8 and stored in the upper image area 406 and the lower image area 405. A data item 901 is the upper image data item stored in the upper image area 406 and a data item 902 is the lower image data item stored in the lower image area 405.

Next, the entire flow of processing performed in the above-described embodiment will be described with reference to Fig. 10. As shown in Fig. 10, the processing starts from step S101 and advances to step S102 where data shown on the upper part of a document is stored in the upper image area 406 under the JPEG system. The processing advances to step S103 where data shown on the lower part of the document is stored in the lower image area 405. The processing advances to step S104 where an entire preview image is displayed. The processing advances to step S105 where a correction value used to correct a displacement between the upper and lower parts of the image is calculated based on an operation performed by the user for the operation unit 103. The processing advances to step S106 where the stored image data items of the upper and lower parts of the image are combined at a relative position determined based on the correction value calculated at step S105 and printed. Then, the processing advances to step S107 to finish the above-described flow of processing.

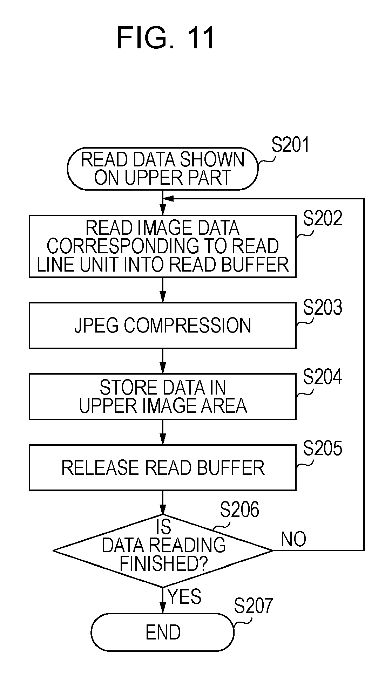

Next, details of step S102 will be described with reference to Fig. 11. Fig. 11 is a flowchart showing the details of step S102 shown in Fig. 10, where the processing starts from S201 and advances to step S202 where the read sensor 602 reads image data shown on the upper part of the A3-sized document 701 and the read image data is accumulated in the read buffer 402. The processing advances to step S203 where the read image data accumulated at step S202 is compressed under the JPEG system through the image compression-and-expansion rotation program 306 and stored in the upper image area 406, and the processing further advances to step S205.

An upper image 901 shown in Fig. 9 is a JPEG image of which data is actually stored. At step S205, the read buffer 402 is released and the processing advances to step S206 where it is determined whether or not the data shown on the upper part of the A3-sized document 701 is entirely read. If the data reading is not finished, the processing advances to step S202 where data of the next read line unit 703 is read. If the data reading is finished, the processing advances to step S207 to finish the above-described flow of processing.

At step S103 shown in Fig. 10, the image data shown on the lower part of the A3-sized document 701 is read, of which details are the same as those of the flow of processing performed to read the image data shown on the upper part, the flow being illustrated in Fig. 11. However, the read image data is stored in the lower image area 405.

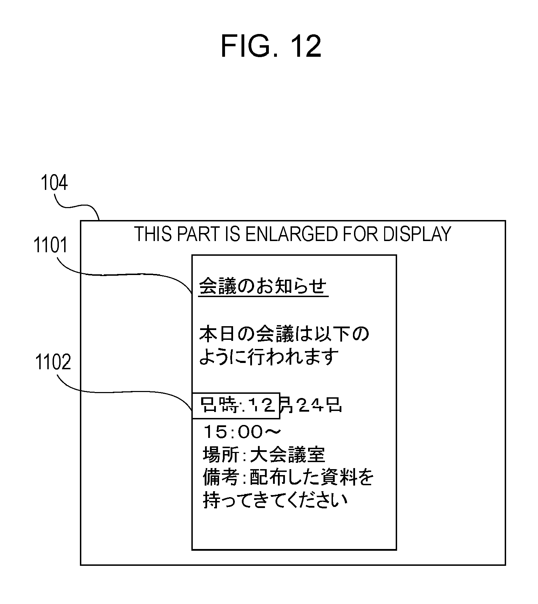

The entire preview image displayed at step S104 will be described with reference to Fig. 12. Fig. 12 shows the display unit 104 showing an image achieved when the data items of the upper and lower parts of the document are read as the entire preview image. An image-before-correction 1101 is an image displayed before correcting a displacement between the images corresponding to the upper and lower parts. A combination interface-display candidate 1102 is a display candidate provided to perform the displacement correction determined through the display unit-determining program 307. If the user views the image-before-correction 1101 and determines that the displacement correction may not be performed, step S105 may be skipped so that the processing advances to step S106. If the user determines that the displacement correction should be performed, the user presses the displacement correction key 505 so that the processing advances to step S105 where an area shown in the combination interface-display candidate 1102 is enlarged and displayed.

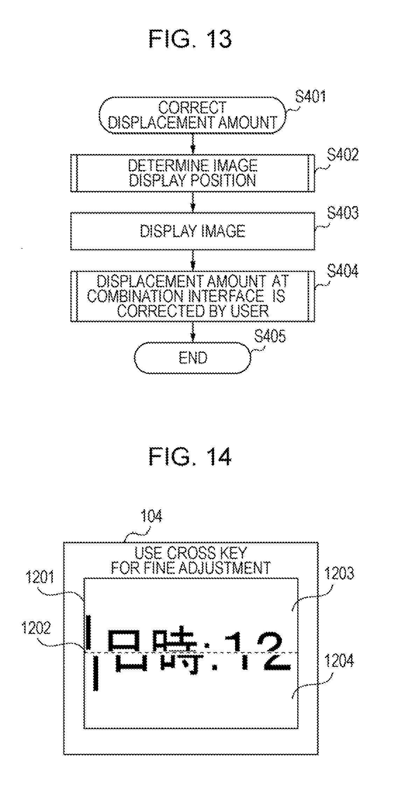

Fig. 13 is a flowchart showing the details of step S105 shown in Fig. 11, where the processing starts from S401 and advances to step S402 where the display position and the display magnification of an image displayed when a displacement is corrected are determined. Since there is a plurality of methods of determining the display position and the display magnification, some of the methods will be exemplarily described later. After the display position and the display magnification of the image displayed at step S402 are determined, the processing advances to step S403. At step S403, the display position determined at step S402 is displayed under the determined display magnification.

Fig. 14 shows the display unit 104 showing an image achieved at step S403 shown in Fig. 13. A combination interface-display frame 1201 is an area showing the upper and lower parts for combination of the image, the parts separated by a separating line 1202. A combination part-upper image 1203 is displayed in the upper part bordering the separating line 1202 and a combination part-lower image 1204 is displayed in the lower part bordering the separating line 1202. Here, the position and/or the magnification specified to display the image data is determined at step S402. Returning to the flowchart shown in Fig. 13, the image data is displayed at step S403, and the processing advances to step S404 where the user moves the image data displayed on a display screen shown in Fig. 14, for example, to correct a displacement occurring at the combination interface. After that, the processing advances to step S405 to finish the above-described flow of processing.

If at least one of the upper and lower parts that are displayed on the above-described display screen shown in Fig. 14 does not include image information from which the image displacement is inferred, it is difficult for the user to determine the magnitude of the displacement occurring at the combination interface. On the other hand, if low magnifying power is used, it is difficult to display the details of the combination interface even though the probability that displayed image data includes the image information is high. Consequently, it is difficult for the user to perceive fine displacements and to correct displacements with precision. Accordingly, a display position and/or a display magnification which makes it easy for the user to perform an operation to correct a displacement is determined at step S402.

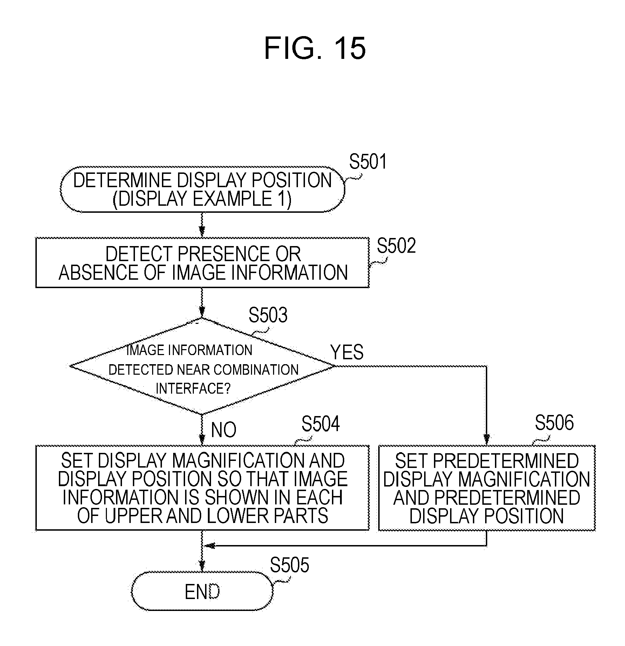

Each of Figs. 15, 16, 17, and 18 shows a variation of the details of step S402.

Fig. 15 is a flowchart showing the details of step S402 performed when the image analysis program 305 detects the presence or absence of the image information. In Fig. 15, the processing starts from step S501 and advances to step S502 where the image information included in image data for which the displacement correction is performed is detected through the image information detection program 351. The processing advances to step S503 where it is determined whether or not the image information is detected in the proximity of an area where the upper image data and the lower image data are combined. If the image information is detected in the proximity of the combination interface, the processing advances to step S506. Otherwise, the processing advances to step S504. At step S506, a predetermined display magnification and a predetermined display position are set and the processing advances to step S505 to finish the above-described flow of processing. At step S504, a display magnification and a display position are set so that the image information is included in each of the upper image data and the lower image data and the processing advances to step S505 to finish the above-described flow of processing.

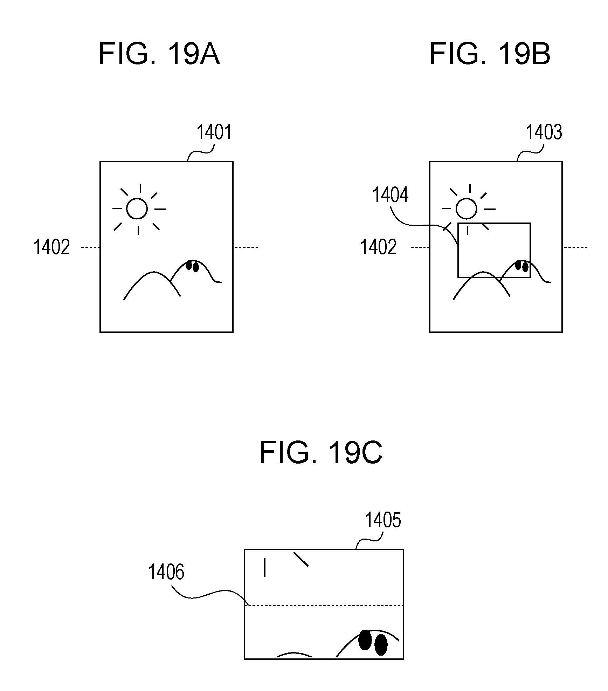

Each of Figs. 19A, 19B, and 19C shows an exemplary image displayed when the processing corresponding to step S504 is performed. An image 1401 is an exemplary image 1 of a document for reading. A line 1402 indicates a combination interface. The user reads data shown on the upper part bordering the combination interface 1402 so as to read data shown on the upper part of the document, and reads data shown on the lower part bordering the combination interface 1402 so as to read data shown on the lower part of the document. Then, the data read from the upper part and that read from the lower part are combined and printed. At that time, the combination interface 1402 is displayed through the display unit 104 to correct a displacement. A combination interface-display frame 1404 shows candidates for a display magnification and a display position that are set at that time. The combination interface-display frame 1404 is determined through the image analysis program 305.

According to each of Figs. 19A, 19B, and 19C, the image information is included in each of the upper image data and the lower image data so that the user can correct the displacement while viewing each of the upper image data and the lower image data. Since the details of the combination interface should be displayed to correct the displacement with precision, the magnification should be increased to some extent, as is the case with Figs. 19A, 19B, and 19C. Since each of the upper and lower parts of a displayed image 1405 shows image data and each of the upper and lower parts is enlarged, the user can easily correct the displacement.

Here, areas including edges may be displayed at the combination interface. In that case, the edges of displayed images are aligned with each other so as to align the positions of the images with each other. Accordingly, the user can easily correct the displacement.

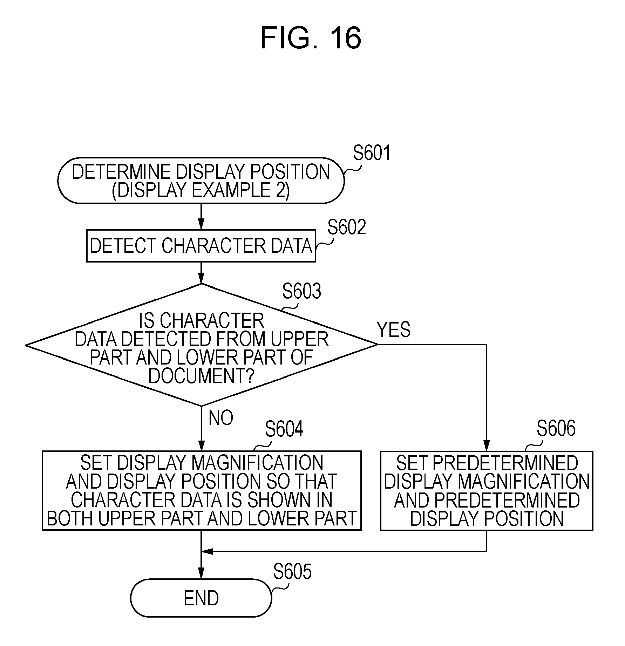

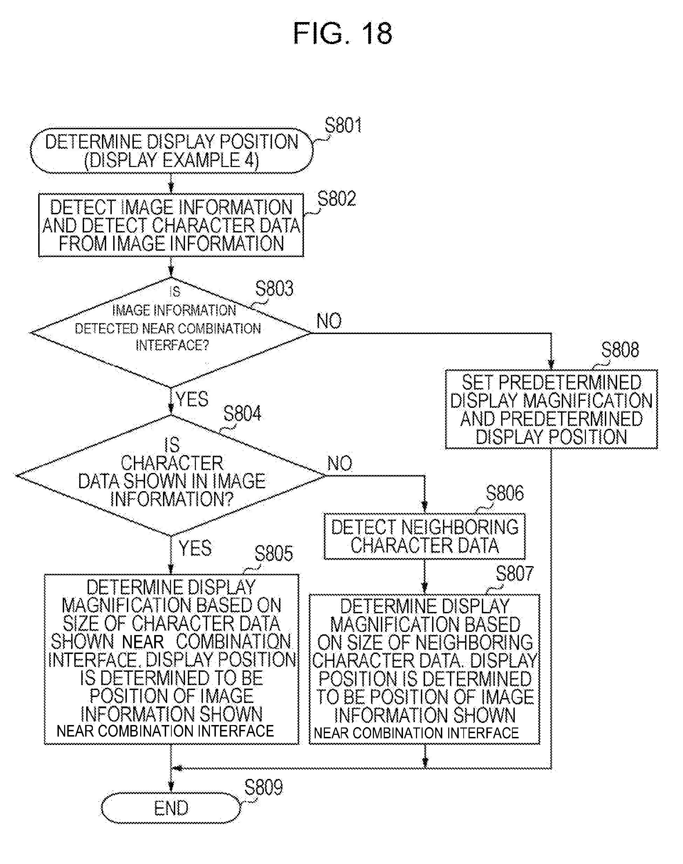

Fig. 16 is a flowchart showing the details of step S402 performed when the image analysis program 305 detects character data. In Fig. 16, the processing starts from step S601 and advances to step S602 where the image analysis program 305 detects character data shown in image data for which the displacement correction is performed. The processing advances to step S603 where it is determined whether or not the character data is detected from each of the upper and lower parts of the document. An example where the combination interface includes the character data will be described later with reference to Fig. 18. If no character data is detected from each of the upper and lower parts of the document, the processing advances to step S604. Otherwise, the processing advances to step S606. At step S606, a predetermined display magnification and a predetermined display position are set and the processing advances to step S605 to finish the above-described flow of processing. At step S604, a display magnification and a display position are set so that the character data is included in each of the upper and lower parts and the processing advances to step S605 to finish the above-described flow of processing. Further, at step S606, an area from which the image information is detected, which is described with reference to Fig. 15, may be displayed in addition to the above-described predetermined display magnification and display position.

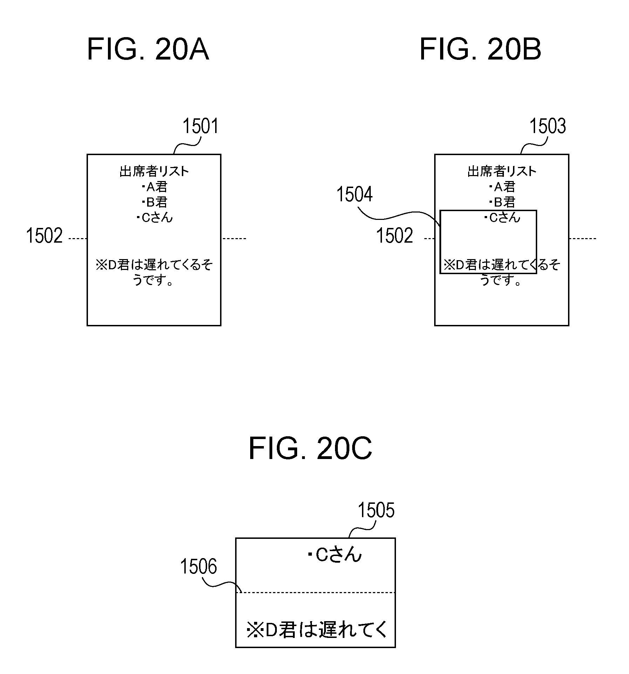

Each of Figs. 20A, 20B, and 20C shows an exemplary image displayed when the processing corresponding to step S604 shown in Fig. 16 is performed. An image 1501 is an exemplary image 2 of the document for reading. A line 1502 indicates a combination interface. The user reads data shown on the upper part bordering the combination interface 1502 to read data shown on the upper part of the document, and reads data shown on the lower part bordering the combination interface 1502 to read data shown on the lower part of the document. Then, the data read from the upper part and that read from the lower part are combined and printed. At that time, the combination interface 1502 is displayed through the display unit 104 to correct a displacement. A combination interface-display frame 1504 shows candidates for a display magnification and a display position that are set at that time. The combination interface-display frame 1504 is determined through the image analysis program 305.

According to each of Figs. 20A, 20B, and 20C, it is set that the character data is included in each of the upper image data and the lower image data so that the user can correct the displacement while viewing each of the upper image data and the lower image data. Since each of the upper and lower parts of an actually displayed image 1505 includes the character data and each of the upper and lower parts is enlarged, the user can easily correct the displacement. When the character data is shown, it becomes possible, in general, to differentiate between a pixel including image information and that including no image information with increased clarity. Further, since the use of the character data allows for identifying a shape with facility, it becomes easier to correct a displacement than in the case where ordinary image data is shown.

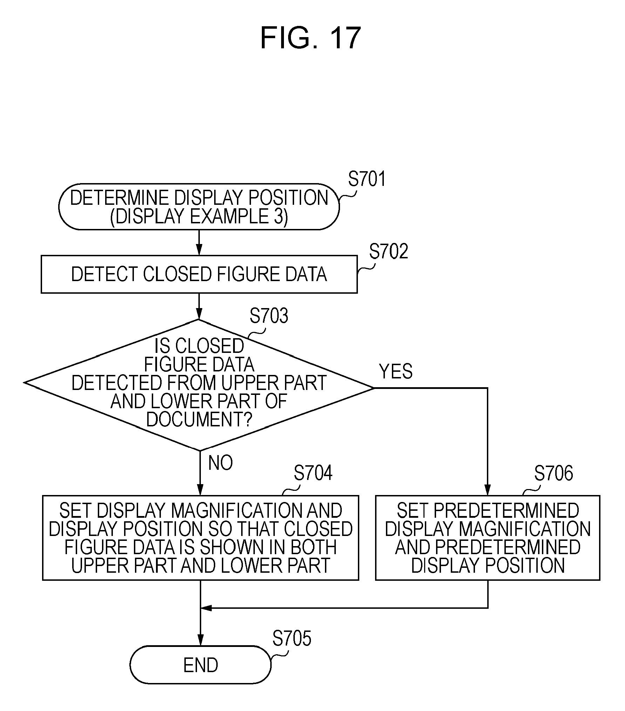

Fig. 17 is a flowchart showing the details of step S402 performed when the image analysis program 305 detects data of a predetermined image pattern. According to Fig. 17, a closed figure is used as the predetermined image pattern. The closed figure denotes a figure including a closed line segment, such as a circle and a square. In Fig. 17, the processing starts from step S701 and advances to step S702 where the image analysis program 305 detects data of a closed figure shown in the image data for which the displacement correction is performed. The processing advances to step S703 where it is determined whether or not the closed figure data is detected from the upper and lower parts of the document.

If no closed figure data is detected from each of the upper and lower parts of the document, the processing advances to step S704. Otherwise, the processing advances to step S706. At step S706, a predetermined display magnification and a predetermined display position are set and the processing advances to step S705 to finish the above-described flow of processing. At step S704, a display magnification and a display position are set so that the closed figure data is included in each of the upper and lower parts and the processing advances to step S705 to finish the above-described flow of processing. Further, at step S706, an area from which the image information is detected, which is described with reference to Fig. 15, may be displayed in addition to the above-described predetermined display magnification and display position.

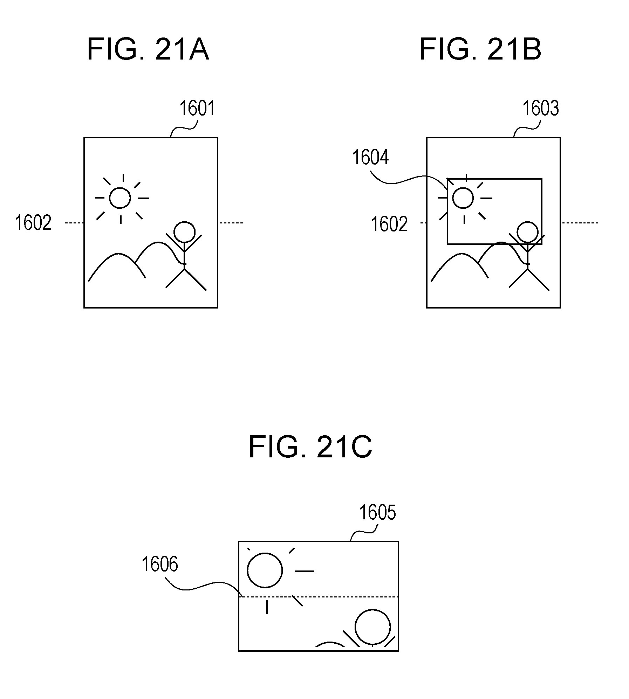

Each of Figs. 21A, 21B, and 21C shows an exemplary image displayed when the processing corresponding to step S704 shown in Fig. 17 is performed. An image 1601 is an exemplary image 3 of the document for reading. A line 1602 indicates a combination interface. The user reads data shown on the upper part bordering the combination interface 1602 to read data shown on the upper part of the document, and reads data shown on the lower part bordering the combination interface 1602 so as to read data shown on the lower part of the document. Then, the data read from the upper part and that read from the lower part are combined and printed. At that time, the combination interface 1602 is displayed through the display unit 104 to correct a displacement. A combination interface-display frame 1604 shows candidates for a display magnification and a display position that are set at that time. The combination interface-display frame 1604 is determined through the image analysis program 305.

According to each of Figs. 21A, 21B, and 21C, it is set that closed space is shown in each of the upper image data and the lower image data so that the user can correct the displacement while viewing each of the upper image data and the lower image data. Since a characteristic figure such as the closed space is displayed and detected through the image analysis program 305 in the above-described embodiment, it becomes easier for the user to correct the displacement than in the case where a determination is made based simply on the presence or absence of the image information as shown in Fig. 19. Further, it becomes easier for the user to correct the displacement than in the past by visually inspecting the image data and recognizing the characterized figure in advance.

Fig. 18 is a flowchart showing the details of step S402 performed when the image analysis program 305 detects character data and especially when the image information is shown at the combination interface. In Fig. 18, the processing starts from step S801 and advances to step S802 where the image information detection program 351 detects the image information included in the image data for which the displacement correction is performed and the character detection program 352 detects character data included in the image data for which the displacement correction is performed. Here, the above-described character data detection may be performed for the entire image data and/or the image information detected through the image information detection program 351.

Next, the processing advances to step S803 to determine whether or not the image information is detected at the combination interface. If the image information is detected, the processing advances to step S804. Otherwise, the processing advances to step S808 where a predetermined display magnification and a predetermined display position are set and the processing advances to step S809 to finish the above-described flow of processing. At step S804, it is determined whether or not the character data is detected from the image information shown at the combination interface. If the character data is detected, the processing advances to step S805. Otherwise, the processing advances to step S806. At step S805, the display magnification is set based on the size of the character data shown at the combination interface. Further, data of the display position is determined to be the image information of the combination interface. After the display position and the display magnification are determined in the above-described manner, the processing advances to step S809 to finish the above-described flow of processing.

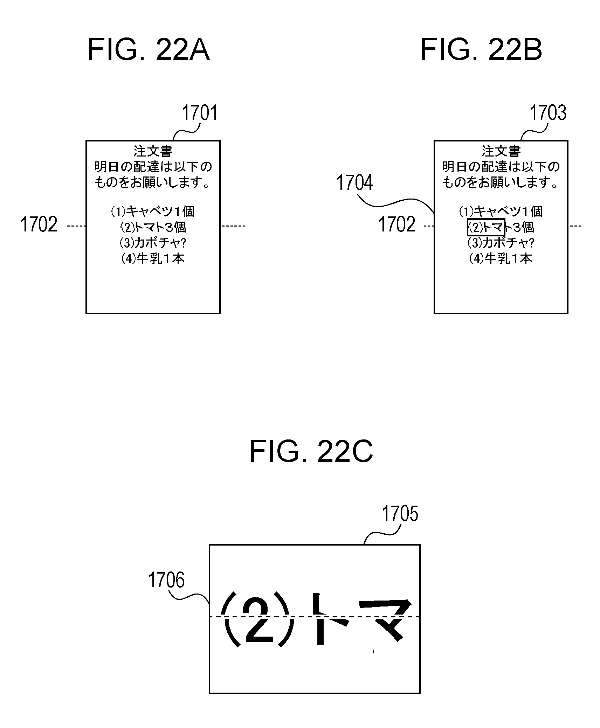

Each of Figs. 22A, 22B, and 22C shows an exemplary image displayed when the processing corresponding to step S805 shown in Fig. 18 is performed. According to an exemplary image 4 shown as an image 1701, data of a character string is shown at a combination interface 1702. Although the character string data is divided into upper data and lower data, the position and the size of a character can be recognized through the character detection program 352. Consequently, it becomes possible to determine the display magnification so that the size of a character is increased and the user can easily read the character. Accordingly, it becomes possible to use a character which is a shape that can be recognized by a person and present an appropriate display magnification so that a displacement can be corrected with increased facility.

Further, character data shown in the proximity of the combination interface is detected at step S806 when the character data is not recognized at step S804. Then, the processing advances to step S807 where the display magnification is determined based on the size of the character data detected at step S806. The display position is determined to be the position of the image information shown at the combination interface. After the display magnification and the display position are determined in the above-described manner, the processing advances to step S809 to finish the above-described flow of processing.

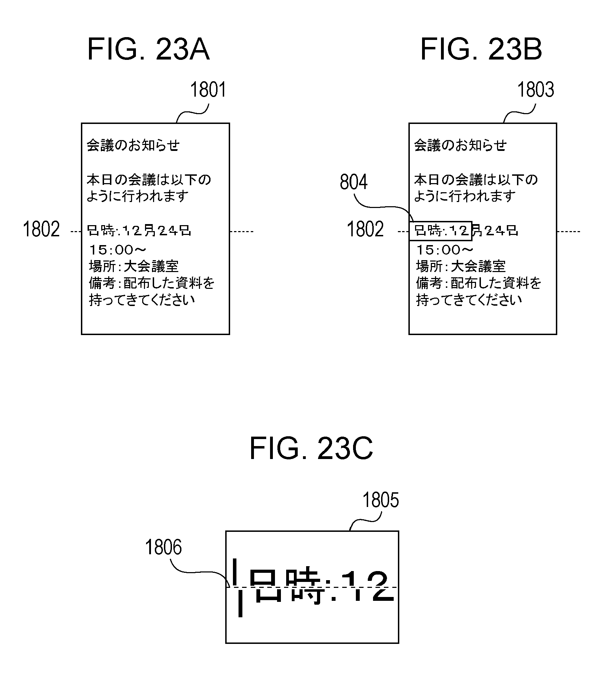

Each of Figs. 23A, 23B, and 23C shows an exemplary image displayed when the processing corresponding to step S807 shown in Fig. 18 is performed. According to an exemplary image 5 shown as an image 1801, data of a character string is shown at a combination interface 1802. The character string data is divided into upper data and lower data and detected through the image information detection program 351 as the image information. However, the character string data is not detected through the character detection program 352 as character data, which makes it difficult to recognize the size of a character. Namely, even though the display position may be the position of the combination interface 1802, it is difficult to determine the display magnification. Therefore, the display magnification is determined based on the size of a character string shown as "15:00 ∼", the character string being shown in the proximity of the combination interface 1802. Accordingly, it becomes possible to display data under an appropriate display magnification even though the image information shown in the display position is divided into upper information and lower information so that the image information is not detected as character data and the size of a character is recognized with difficulty.

When character data is detected near the combination interface in the above-described manner, it is highly possible that the image information shown at the combination interface is also character data and the size of the possible character data is often approximately equal to that of the character data detected near the combination interface considering an ordinary text document. Therefore, the user can correct a displacement while viewing the character data under an appropriate display magnification.

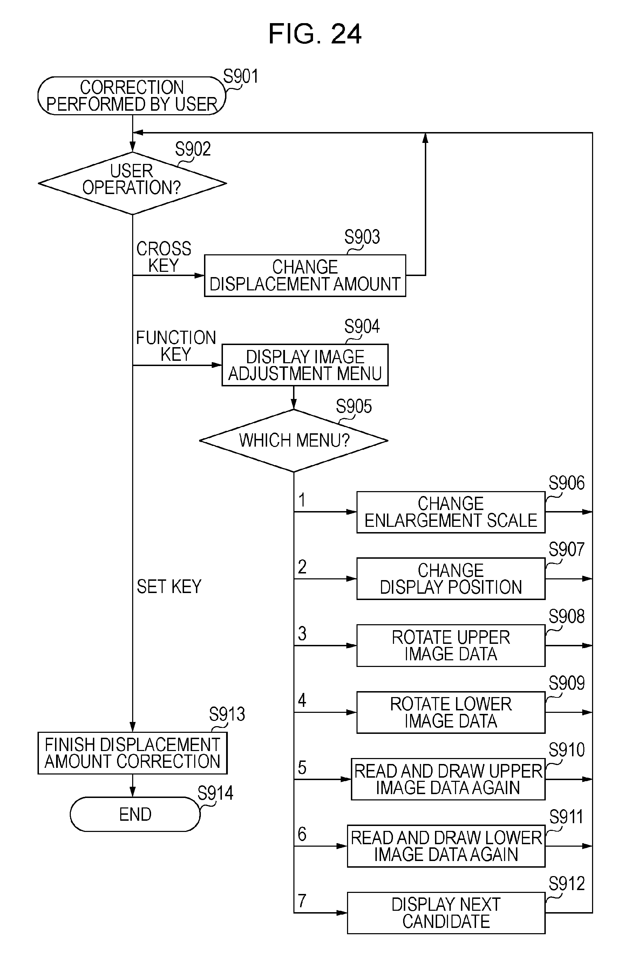

Next, step S404 shown in Fig. 13 will be described in detail with reference to a flowchart of Fig. 24. First, according to Fig. 24, a display image shown in Fig. 14 is displayed on the display unit 104. In Fig. 24, the processing starts from step S901 and advances to step S902 where the image processing apparatus enters a standby state so as to wait for an operation performed by the user. The processing advances to step S903 when the user presses the cross key 501, advances to step S904 when the user presses the function key 503, and advances to step S913 when the user presses the set key 502.

At step S903, the user corrects a displacement occurring on a screen image shown in Fig. 14 through the cross key 501. For example, when the user presses the right portion of the cross key 501, the combination part-lower image 1204 is moved to the right by as much as a predetermined amount. When the user presses the upper portion of the cross key 501, the combination part-lower image 1204 is moved upward by as much as a predetermined amount. At that time, the combination part-upper image 1203 is fixed at all times and only the combination part-lower image 1204 is moved. While the cross key 501 is pressed, the processing procedures corresponding to steps S902 and S903 are performed repeatedly.

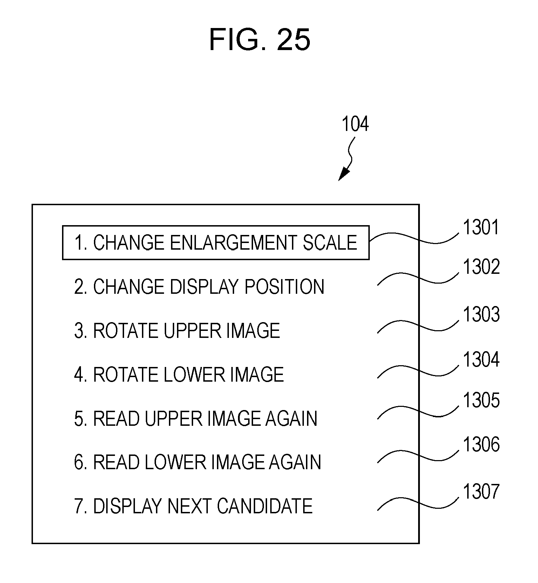

At step S904, an image adjustment menu is displayed. Fig. 25 shows an exemplary image adjustment menu displayed at step S904. The processing advances to step S906 when the user selects a message 1301 shown as "1. CHANGE ENLARGEMENT SCALE". Further, the processing advances to step S907 when the user selects a message 1302 shown as "2. CHANGE DISPLAY POSITION". Further, the processing advances to step S908 when the user selects a message 1303 shown as "3. ROTATE UPPER IMAGE". Further, the processing advances to step S909 when the user selects a message 1304 shown as "4. ROTATE LOWER IMAGE". Further, the processing advances to step S910 when the user selects a message 1305 shown as "5. READ UPPER IMAGE AGAIN". Further, the processing advances to step S911 when the user selects a message 1306 shown as "6. READ LOWER IMAGE AGAIN". Further, the processing advances to step S912 when the user selects a message 1307 shown as "7. DISPLAY NEXT CANDIDATE".

At step S906, the enlargement scale is changed and the processing returns to step S902. At step S907, the display position is changed and the processing returns to step S902. At step S908, the upper image data is rotated 180 degrees and the processing returns to step S902. At step S909, the lower image data is rotated 180 degrees and the processing returns to step S902. At step S910, the upper image data is read again by performing the same flow of processing as that of step S102 and the processing returns to step S902. At step S911, the lower image data is read again by performing the same flow of processing as that of step S103 and the processing returns to step S902. At step S912, a different candidate for the image display position determined through the flow of processing of step S402 so that the image display position is displayed again and the processing returns to step S902.

Executing step S912 allows the user to display the next candidate when the user does not like the display position and the display magnification that are specified for the displayed screen image, which increases the possibility of being provided with a desired screen image. At step S913, the user finishes the displacement correction, and the processing advances to step S914 to finish the above-described flow of processing. Executing the flow of processing shown in Fig. 13 allows the user to correct a displacement on a desired screen image.

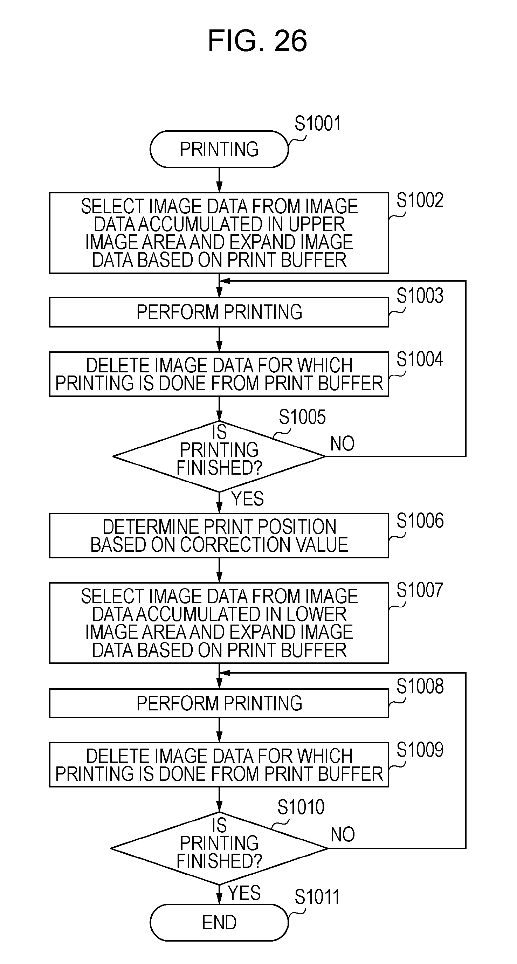

Fig. 26 is a flowchart showing the details of step S106 shown in Fig. 10. The processing starts from step S1001 and advances to step S1002. At step S1002, image data is decompressed from the image data accumulated on the upper image area 406, where the amount of the decompressed image data is appropriate for the size of the print buffer 401, and the processing advances to step S1003 where the data decompressed into the print buffer 401 is printed through the print unit control program 304. Then, the processing advances to step S1004 where the data for which the printing is finished is deleted from the print buffer 401 and the processing advances to step S1005 where it is determined whether or not the entire image data accumulated on the upper image area 406 had been printed. If the entire image data has not been printed, the processing advances to step S1003 where the next image data is printed. Otherwise, the processing advances to step S1006 where it is determined how much the lower image data should be displaced for printing based on a correction value calculated at step S105, and advances to step S1007.

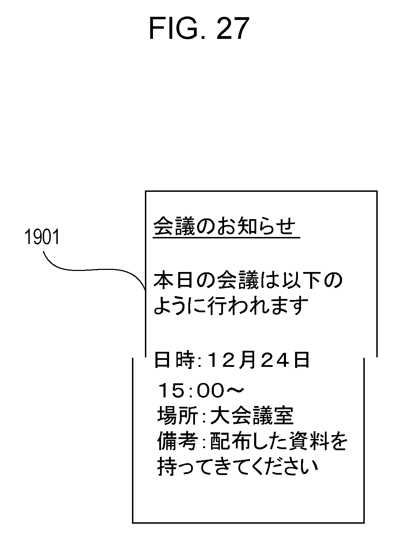

At step S1007, image data is decompressed from the image data accumulated on the lower image area 405, where the amount of the decompressed image data is appropriate for the size of the print buffer 401, and the processing advances to step S1008 where data of the lower image is read from the lower image area 405 based on a print position determined at step S1006. Fig. 27 shows an image achieved by correcting a displacement between images. For example, when data is read from a pixel provided on the left side of Fig. 27, the data is read at a time later than usual based on the determined print position.

At step S1008, the data decompressed into the print buffer is printed through the print control program 304 and the processing advances to step S1009 where the data for which the printing is finished is deleted from the print buffer 401. The processing advances to step S1010 where it is determined whether or not the entire image data accumulated on the lower image area 405 had been printed. If the printing has not been finished, the processing advances to step S1008 where the next image data is printed. If the printing has been finished, the processing advances to step S1011 to finish the above-described flow of processing.

By performing the above-described processing, the image information is included in image data shown at the combination interface displayed on the display screen. Therefore, it becomes possible to display data so that the user can easily correct a displacement between images. Further, when character data is shown, processing is performed to recognize and display the character data, which makes it easier for the user to correct a displacement than in the past. Further, even though the character data is divided between images at the reading time and recognized with difficulty, the display magnification is determined based on character data shown near the combination interface, which makes it possible to display data appropriate to correct a displacement.

Here, in the above-described embodiments, the entire image data is divided into image data items for reading and stored in a memory (DRAM), and image data shown at the combination interface shown in the proximity of an area where the image data items are combined is extracted and displayed. However, without being limited to the above-described embodiments, the image data shown at the combination interface may be stored in the memory as data used to correct a displacement aside from the image data items for combining, and the image data items may be combined based on the result of correction performed based on the image data shown at the combination interface, which is also one of embodiments of the present invention. In that case, the image data shown at the combination interface, the image data being stored in the memory, can be narrowed down to data shown on an area including the image information. Consequently, the image data can be enlarged for display to a degree higher than usual.

The image processing apparatus according to each of the above-described embodiments includes the read unit provided to read document data, the display unit provided to display image data, and the print unit provided to print the image data. However, without being limited to the above-described embodiments, image data divided and read through the read unit may be transmitted to the display data for display, which is also one of embodiments of the present invention. According to another embodiment of the present invention, the image processing apparatus may capture and combine image data items. Namely, the image processing apparatus may be a digital camera that can perform so-called panorama photography.

Further, the image processing apparatus may not include the read unit, the display unit, and the print unit, as is the case with a desktop personal computer (PC). In that case, image data which is divided and read is transmitted through an input unit connected to a reading apparatus, and subjected to the processing clarified in the above-described embodiments to display a combination interface through an external display apparatus. Further, an external printing apparatus may be controlled so that combined data items are printed at a print position where a displacement is corrected when the print position is determined.

### Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image processing apparatus for combining a plurality of image data items, the image processing apparatus comprising:
detection means (100) arranged to detect (S402) image information included in a plurality of image data items stored in a memory;
specifying means (100) arranged to specify (S402) an area including a combination interface (1202) of each of the image data items based on a result of the detection performed through the detection means, the area including respective parts (1203, 1204) of the image data items that include at least the detected image information;
display control means (100) arranged to display (S403) on a display screen image data of parts (1203, 1204) of the image data items within the specified area;
determining means (100) arranged to determine (S404) a relative position of said image data items based on at least one relative position of the displayed parts (1203, 1204).

2. The image processing apparatus according to Claim 1, wherein the detection means is configured to detect the image information based on edge data included in the image data items stored in the memory.

3. The image processing apparatus according to Claim 1 or Claim 2, wherein the specifying means is configured to specify an area including edge data at the combination interface (1202) of the image data items to be combined.

4. The image processing apparatus according to any one of Claims 1 to 3, wherein the detection means is configured to detect character data in the image data items, and
wherein the specifying means is configured to specify an area based on the detected character data.

5. The image processing apparatus according to Claim 4, wherein the specifying means is configured to specify an area including the detected character data.

6. The image processing apparatus according to Claim 4, wherein in the case that the detection means detects image information at the combination interface (1202) of the image data items and detects character data in the proximity of the combination interface (1202) of the image data items, the specifying means is configured to specify an area including the image information, wherein a size of the area is determined based on a size of the character data.

7. The image processing apparatus according to any preceding claim, wherein the display control means is further configured to enlarge the specified area and display the enlarged area in the case that an instruction is issued by a user.

8. The image processing apparatus according to any preceding claim, further comprising:
movement control means arranged to move an image part displayed on the display screen based on an alignment modification instruction issued by a user,
wherein the determining means is configured to determine a relative position of said parts (1203, 1204) based on an amount by which the image part is moved by the movement control means.

9. The image processing apparatus according to any preceding claim, further comprising combination means arranged to combine the plurality of image data items based on the relative position determined by said determining means.

10. The image processing apparatus according to any preceding claim, further comprising output means arranged to output image data wherein the outputted image data includes the image data items combined based on the determined relative position.

11. The image processing apparatus according to Claim 10, wherein the output means is configured to output image data to a printing device and to cause the printing device to print the outputted image data.

12. The image processing apparatus according to Claim 10, wherein the output means is configured to output image data to a display device and to cause the display device to display the outputted image data.

13. An image processing method for combining a plurality of image data items, the method comprising:
detecting (S402) image information included in a plurality of image data items stored in a memory;
specifying (S402) an area including a combination interface (1202) of each of the image data items based on a result of the detection, the area including respective parts (1203, 1204) of the image data items that include at least the detected image information;
displaying (S403) on a display screen image data of parts (1203, 1204) of the image data items within the specified area;
determining (S404) a relative position of said image data items based on at least one relative position of the displayed parts (1203, 1204).

14. A computer program which, when executed on a device, causes the device to execute the image processing method according to Claim 13.

15. A computer readable recording medium storing the program according to Claim 14.
